# EUROPEAN PATENT APPLICATION

(11) **EP 4 002 312 A1**
(43) Date of publication of application: **25.05.2022**
(21) Application number: 21209417.1
(22) Date of filing: 19.11.2021
(51) Int. Cl.: G07C 9/00, A63C 9/00, G06Q 30/06

(54) **SKI EQUIPMENT ACCESS AND BINDING SETTING MULTI-FACTOR AUTHENTICATION CONFIRMATION SYSTEM**

(30) Priority: 20.11.2020 US 202063116242 P; 18.10.2021 US 202117503865
(71) Applicant: Fitzsimmons, Paul, San Diego, CA 92037 (US); Friedman, Nicholas, Breckenridge, CO 80424 (US)
(72) Inventor: Fitzsimmons, Paul, San Diego, CA 92037 (US); Friedman, Nicholas, Breckenridge, CO 80424 (US)
(74) Representative: Murgitroyd & Company

(57) **Abstract**

A remote access system for ski equipment rental with remote multi-factor authentication ski binding release settings (DINS), calculation, verification and acknowledgement. An integral server connected lockable device interlink application provides for remote rental and binding visual release indicator setting resolved with user verification for access. Skier informational input via remote app is required for binding DIN setting by a qualified technician before placement in the server connected lockable device. Remote verification of visual release indicator setting (DINS) and acknowledgement by the skier is required before release from the server connected lockable device by a server-based recognition and authentication application software, such as a smart locker with a mobile and/or web application for skier information required for a multi-factor authentication ski binding release settings (DINS), calculation, verification and acknowledgement to release ski equipment from connected smart lockers or similar device.

## Description

This application claims the benefit of Provisional Application Serial No. 63/116,242, filed November 20, 2020.

### BACKGROUND OF THE INVENTION

### 1. Technical Field

This invention relates to electronic access server connected lockable devices for renting sports equipment specifically ski equipment and setting the skis release bindings, receiving user authentication, and acknowledgement of DIN settings prior to releases ski equipment.

### 2. Description of Prior Art

Prior art sports equipment rental and tracking systems can be seen generally in U.S. Patents 4,436,321, 5,498,017, 7,017,808, 7,260,545, 7,933,808.

In U.S. Patent 4,436,321, an electronic release safety ski binding can be seen wherein a ski binding has an electro-magnetic activation release mechanism.

U.S. Patent 5,498,017 is directed to a monitoring and control device for coupling between a boot and a ski release binder a predetermined release force.

U.S. Patent 7,017,808 claims an electronic tracking system for sports goods utilizing code transmission with data transfer receipt of specific code assigned articles.

U.S. Patent 7,260,545 discloses a system and method for preselecting skis based on predetermined users' physical characteristics related to their weight.

U.S. Patent 7,933,808 is directed to a method of facilitating a rental transaction using access code between the owner and a borrower party transmitting from a central controller.

Currently, all ski rentals must be completed in person and all visual release indicators acknowledgement and verifications are in person. It is desirable to reduce or remove the need for in-person acknowledgement and verification.

### SUMMARY OF THE INVENTION

The disclosure concerns a remote server connected lockable device rental information and control access system for ski equipment requiring input of renter's specific physical and ski qualifications for remote offsite setting of the binding release DINS by a qualified ski technician. A secondary remote transmitted confirmation of the binding setting and user acknowledgement is required to release the server connected lockable device on the skis before use.

In a first aspect of the disclosure, a method of facilitating a remote rental transaction of ski equipment and authentication of remote ski binding release settings comprises,
a remote access lockable device accessible by electronic transmitted code,
remote electronically transmitted ski renter personal user ID information,
remotely setting ski binding DIN settings by a certified ski technician based on personalized user ID information,
placing said binding set skis within the remote access lockable device, electronically providing access code for lockable device and a ski binding safety information link to ski renter,
ski binding verification by return transmission of DIN settings displayed graphically on access platform by ski renter,
remote confirmation of DIN settings with calculated binding DIN settings by certified ski technician,
actuating a smart lock in said lockable device releasing said skis.

In some embodiments, said ski renter personalized ID information includes, skier's height, weight, gender, shoe size and skiing ability.

In some embodiments, said lockable device comprises but is not limited to equipment containment receptacles, lockers and ski retainment racks.

In some embodiments, said electronic access and transmission of skier's personal ID information and return transmission of electronic generated access code comprises, telecommunication network via internet-based CPU protocol, smart phones and enabled computer web link access thereby.

In some embodiments, verifying ski renter's access code comprises,
comparing ski binding DIN setting transmitted by ski renter input with DIN settings stored in CPU by certified ski technician and generating access code for electronic lock within said lockable storage device for ski release and access.

In some embodiments, the method further comprises electronically transmitting a confirmation message from the central CPU to ski renter indicating receipt of verification code.

In some embodiments, said transmitted access code comprises a graphic QR code scannable by ski renter for electronic access. In some embodiments, verification by QR access code indicators match calculated DIN setting confirmed ski release, no further action required. In other embodiments, no verification of QR access scan code to calculated DIN setting, generating contact message to administration and ski user.

Currently, all ski rentals must be completed in person and all visual release indicators acknowledgement and verifications are in person. The invention enables removal of the in-person acknowledgement and verification.

A remote access system for ski equipment rental with remote multi-factor authentication ski binding release settings (DINS), calculation, verification and acknowledgement may be developed. An integral server connected lockable device interlink application may provide for remote rental and binding visual release indicator setting resolved with user verification for access. Skier informational input via remote app may be required for binding DIN setting by a qualified technician before placement in the server connected lockable device. Remote verification of visual release indicator setting (DINS) and acknowledgement by the skier may be required before release from the server connected lockable device by a server-based recognition and authentication application software, such as a smart locker with a mobile and/or web application for skier information required for a multi-factor authentication ski binding release settings (DINS), calculation, verification and acknowledgement to release ski equipment from connected smart lockers or similar device.

### DESCRIPTION OF THE DRAWINGS

Figure 1 is a block flow diagram of the ski equipment access setting and binding verification system.
Figure 2 is an enlarged graphic illustration of a ski and ski boot engagement safety release bindings.
Figure 3 is an enlarged illustration view of the binding setting for verification.
Figure 4 is a graphic front elevational representation of the lockable device.
Figure 5 is a block flow diagram of the ski equipment access setting and binding verification system in an alternative form.

### DETAILED DESCRIPTION OF THE INVENTION

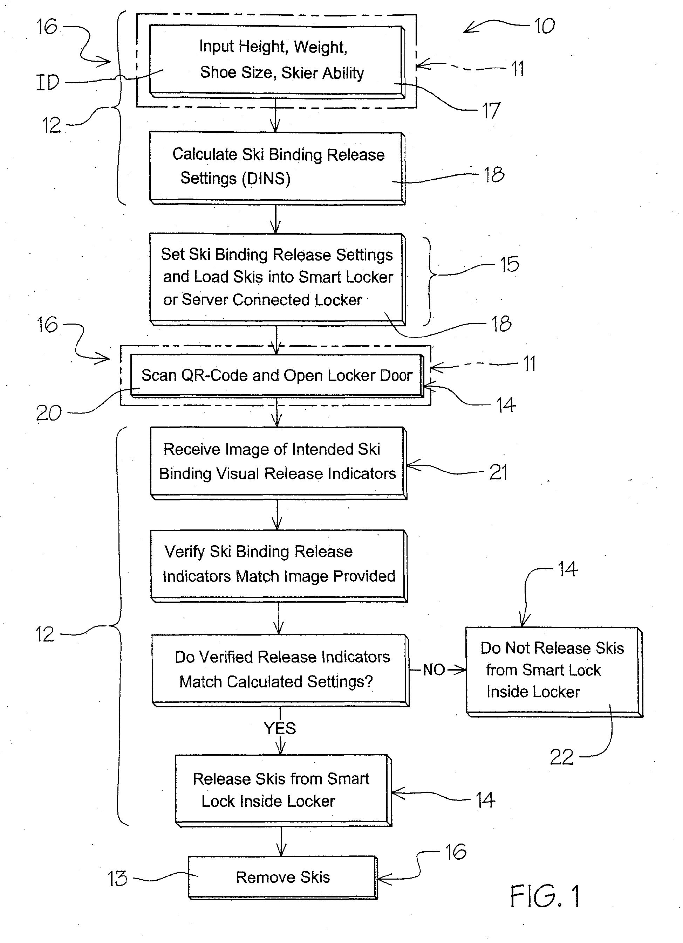

Referring to figures 1-3 of the drawings, a ski equipment rental and remote access system 10 of the invention is illustrated in a primary system operational block flow diagram as seen in figure 1 of the drawings. The remote access system 10 utilizes computer based smart phone and/or web applications 11 that interlinks with a server-based CPU 12 through telecommunications to input and control access to ski equipment 13 from a servers connected lockable device 14 and a link to a remote ski technician 15.

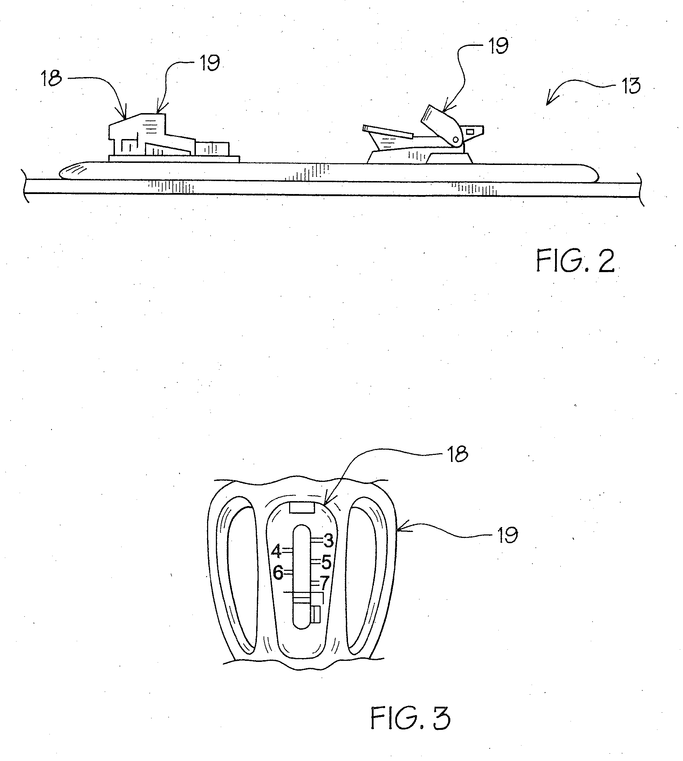

The key aspect of the rental access system 10 is not only to provide ease of rental skis from an electronically enabled server connected lockable device 14, but to provide a verifiable certified safety ski binding DIN setting for determining the binding release force required remotely by a certified ski technician 15 illustrated graphically in figure 3 of the drawings. The rental and access system 10 provides for enhanced user-friendly remote ski rental and certified binding setting in a software operational platform.

The informational flow and access of the system 10 in use is illustrated in figure 1 as follows.

A user 16 enables access to the rental and remote access system 10 of the invention through the dedicated smart phone or web app 11 or for website access to rent ski equipment securely. The user 16 is initially prompted for specific ski rental information including, in this application, height, weight, gender, shoe size and the skiing ability 17 along with the usual user identification and payment information generally indicated as ID.

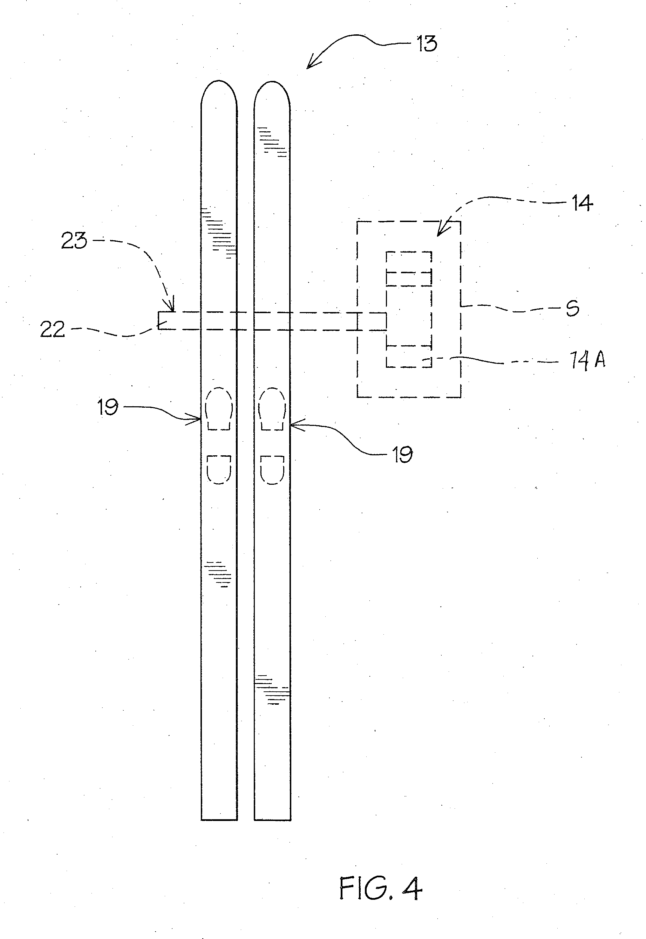

The server based CPU 12 provides informational calculations as to the ski 13's binding 19 DIN settings 18 based on a set of pre-programmed established properties and transmits instructions for the settings via telecommunication internet access to the certified ski technician 15 who reviews the information and settings and sets the specific DIN setting 18 on the bindings 19 and then loads and locks skis 13 into the server connected lockable device 14 as best seen in figure 4 of the drawings.

The DIN, Deutsches Institut fur Normung, binding setting 18 which is the established industry's calculation of release force settings for ski bindings 19 and is typically universally used and accepted. This provides the safety verification of a certified ski technician 15 setting the bindings 19 which is critical to meet liability compliance requirements in the industry.

The user is then prompted through their smart phone or web app 11 confirmation that the skis 13 are ready for pick-up and an access code 20 is provided. A link is also provided to the user 16 to a presentation on ski binding safety must be watched before, in this example, providing rental locker access barcode activation thus meeting industry standards for structural information to the user before renting such equipment.

The user 16 then scans the activated access code 20 electronically . The skis 13 are still secured within the server connected lockable device 14 as illustrated graphically in figure 4 of the drawings. The user 16 is then prompted to confirm with their smart phone or web app the binding DIN setting 18 indicated on the graphic flow diagram at 21 and confirm they will not change those settings. The DIN setting 18 verification is then received by the server CPU 12 and comparison with the binding DIN settings calculated and confirmed in the system. If a match is determined at 23, smart lock 22 is activated releasing the skis 13 for removal from the server connected lockable device 14.

It will be evident that this double verification and confirmation system will provide secure and safe setting and removal access for skiers.

The rental remote access system 10 thereby avoids the time consuming current rental system that requires, as noted, an in-person DIN setting review and acknowledgement as established by industry standards.

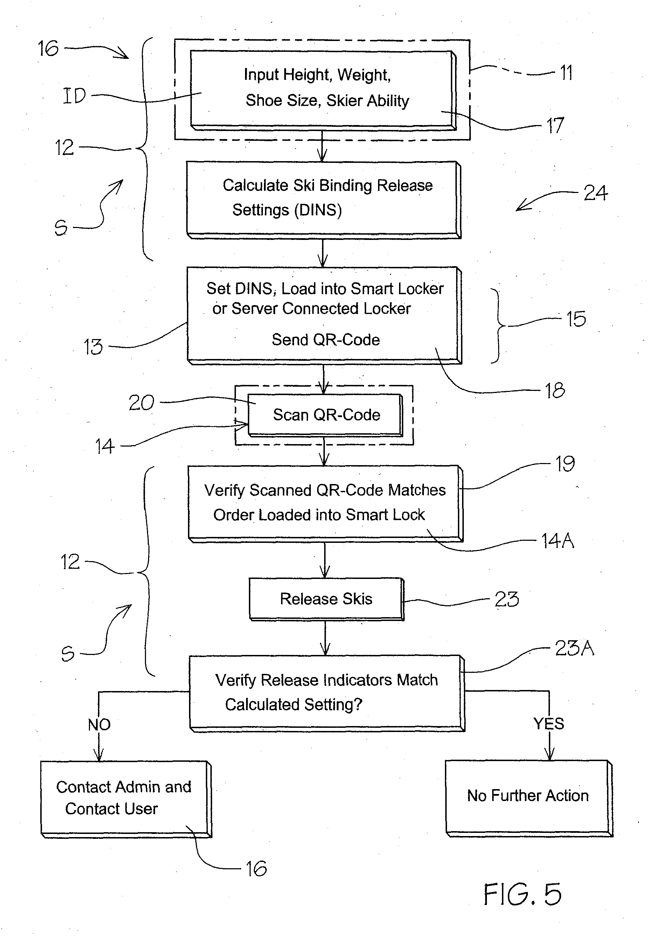

Referring to figure 5 of the drawings, a ski equipment rental and remote access system of the invention is illustrated in an alternative form operational block flow diagram 24.

Alternate operational form indicated at graphics 24 confirms the use of a QR graphic scannable access code 20 representation, well known within the art, which is used to verify and match the QR access code 20 loaded into the lockable device 14's smart lock 14A.

This provides real-time remote verification with scannable access code 20 by the user 16 and the skis are then released at 23. It will be noted that the secondary verification release indicator matches the calculated DINS at 23A and verified release indicator so matched calculating settings at 22 previously confirmed.

If no match is confirmed, a contact administrator and customer action is initiated. Alternately, if match is confirmed, no further action is required and the release proceeds at 23.

It will be apparent from the above disclosure that a preferred embodiment may include any form of ski locking configuration inclusive, but not limited to containment receptacles, such as lockers and racks, for example. The multi-factor authentication confirmation system of the invention relies on such and not the limitations of a specific chosen physical restriction configuration that may be instituted.

It will thus be seen that a new and novel remote rental access system 10 of the invention has been illustrated and described and that various changes and modifications may be made thereto without departing from the scope of the invention as defined in the claims appended hereto.

## Claims

1. A method of facilitating a remote rental transaction of ski equipment and authentication of remote ski binding release settings comprises,
a remote access lockable device accessible by electronic transmitted code,
remote electronically transmitted ski renter personal user ID information,
remotely setting ski binding DIN settings by a certified ski technician based on personalized user ID information,
placing said binding set skis within the remote access lockable device, electronically providing access code for lockable device and a ski binding safety information link to ski renter,
ski binding verification by return transmission of DIN settings displayed graphically on access platform by ski renter,
remote confirmation of DIN settings with calculated binding DIN settings by certified ski technician,
actuating a smart lock in said lockable device releasing said skis.

2. The method according to claim 1 wherein said ski renter personalized ID information includes, skier's height, weight, gender, shoe size and skiing ability.

3. The method according to claim 1 or claim 2 wherein said lockable device comprises but not limited to equipment containment receptacles, lockers and ski retainment racks.

4. The method according to any preceding claim wherein said electronic access and transmission of skier's personal ID information and return transmission of electronic generated access code comprises, telecommunication network via internet-based CPU protocol, smart phones and enabled computer web link access thereby.

5. The method according to any preceding claim wherein verifying ski renter's access code comprises,
comparing ski binding DIN setting transmitted by ski renter input with DIN settings stored in CPU by certified ski technician and generating access code for electronic lock within said lockable storage device for ski release and access.

6. The method according to any preceding claim further comprising, electronically transmitting a confirmation message from the central CPU to ski renter indicating receipt of verification code.

7. The method according to any preceding claim wherein said transmitted access code comprises,
a graphic QR code scannable by ski renter for electronic access.

8. The method according to claim 7 wherein verification by QR access code indicators match calculated DIN setting confirmed ski release, no further action required.

9. The method according to claim 7 further comprising, no verification of QR access scan code to calculated DIN setting, generating contact message to administration and ski user.
